# EUROPEAN PATENT APPLICATION

(11) **EP 2 913 373 A1**
(43) Date of publication of application: **02.09.2015**
(21) Application number: 15156209.7
(22) Date of filing: 24.02.2015
(51) Int. Cl.: C09J 133/02, C09J 133/06

(54) **Pressure-sensitive adhesive composition and pressure-sensitive adhesive sheet**

(30) Priority: 28.02.2014 CN 201410073145
(71) Applicant: Nitto Denko Corporation, Ibaraki-shi Osaka 567-8680 (JP)
(72) Inventor: Su, Ning, Songjiang Shanghai 201613 (CN); Wang, Xiaochen, Songjiang Shanghai 201613 (CN); Ding, Frank, Songjiang Shanghai 201613 (CN); Okada, Yoshihiro, Ibaraki-shi Osaka 567-8680 (JP); Nishiyama, Naoyuki, Ibaraki-shi Osaka 567-8680 (JP); Shirai, Masato, Ibaraki-shi Osaka 567-8680 (JP); Yoshida, Noboru, Ibaraki-shi Osaka 567-8680 (JP)
(74) Representative: Grünecker Patent- und Rechtsanwälte PartG mbB

(57) **Abstract**

[PROBLEM TO BE SOLVED] To provide a PSA composition capable of forming a high tack PSA with good static peel resistance.

[SOLUTION] A PSA composition comprising a base polymer and a tackifier resin is provided. The base polymer is an acrylic polymer. The tackifier resin comprises a tackifier resin T_{L} having a softening point of lower than 105 °C and a tackifier resin T_{H} having a softening point of 105 °C or higher, but 170 °C or lower. The tackifier resin T_{L} comprises a rosin-based resin. The tackifier resin T_{H} comprises a phenolic resin.

## Description

### [Technical Field]

The present invention relates to a pressure-sensitive adhesive composition and a pressure-sensitive adhesive sheet.

### [Background Art]

In general, pressure-sensitive adhesive (or PSA; the same applies hereinafter) has characteristics to be in a soft solid (viscoelastic) state in a room temperature range and adhere to adherend under some pressure. Because of such characteristics, PSA has been widely used for attachment of components, notification of information, etc., in various industrial fields from home appliances to automobiles to OA equipment, and so forth. A typical PSA composition comprises a base polymer and a tackifier resin. As the base polymer, a polymer that exhibits rubber elasticity at room temperature can be preferably used. For example, Patent Document 1 discloses addition of a tackifier resin to a (meth)acrylic copolymer to improve the adhesive properties of an acrylic PSA composition on low polar (low energy) surfaces.

### [Citation List]

### [Patent Literature]

[Patent Document 1] Japanese Patent Application Publication No. H7-26227

### [Summary of Invention]

### [Technical Problem]

To increase the stability of quality of a product using PSA, it is effective to increase consistency (reproducibility) in pressure bonding the PSA to an adherend. This is because for a given PSA, varying the pressure bonding conditions will likely lead to inconsistencies in the adhesive properties of the PSA. In particular, when the pressure bonding of the PSA is operated by hand, it is difficult to carry out the pressure bonding operation reproducibly. On the other hand, from the standpoint of the productivity, it is desirable to reduce the time required for the pressure bonding operation. However, when the operation time is reduced, usually, the consistency of the operation tends to decrease.

The present inventors have thought that by increasing the tack (tackiness) of a PSA, adhesion of the PSA to an adherend could be enhanced and inconsistencies in adhesive properties due to varied pressure bonding conditions could be reduced. In general, however, with increasing tack of PSA, the cohesion tends to decrease. Low cohesion of PSA tends to lead to low resistance of a joint formed of the PSA against a continuous stress applied thereto (i.e. capability to resist the stress to maintain a good adhesion state).

An objective of the present invention is thus to provide a PSA composition capable of forming a high tack PSA resistant to a continuous stress. Another related objective is to provide a PSA sheet having such a PSA.

### [Solution to Problem]

The present description provides a PSA composition comprising a base polymer and a tackifier resin. The base polymer is typically an acrylic polymer. The tackifier resin comprises a tackifier resin T_{L} having a softening point of lower than 105 °C and a tackifier resin T_{H} having a softening point of 105 °C or higher, but 170 °C or lower. The tackifier resin T_{L} preferably comprises a rosin-based resin. The tackifier resin T_{H} preferably comprises a phenolic resin. Such a PSA composition can form a high tack PSA having good resistance to a continuous stress applied thereto (or "static peel resistance" hereinafter).

The PSA composition according to a preferable embodiment comprises the tackifier resin T_{L} and the tackifier resin T_{H} in a combined amount of 50 parts by weight or less (typically 5 parts by weight or greater, but 50 parts by weight or less, e.g. 10 parts by weight or greater, but 50 parts by weight or less) to 100 parts by weight of the acrylic polymer. Such a PSA composition tends to form a PSA readily manageable for a pressure bonding operation.

The art disclosed herein can be preferably implemented in an embodiment where the tackifier resin T_{L} comprises, as the rosin-based resin, a rosin-based resin having a softening point of 60 °C or higher. This can allow preferable formation of a high tack PSA with good static peel resistance.

The art disclosed herein can be preferably implemented in an embodiment where the tackifier resin T_{L} comprises, as the rosin-based resin, a hydrogenated rosin ester having a softening point of 60 °C or higher. This can allow preferable formation of a high tack PSA with good static peel resistance.

The art disclosed herein can be preferably implemented in an embodiment where the tackifier resin T_{L} comprises, as the rosin-based resin, a non-hydrogenated rosin ester having a softening point of 60 °C or higher. For instance, it can be preferably practiced in an embodiment where the tackifier resin T_{L} comprises both a hydrogenated rosin ester and a non-hydrogenated rosin ester. Such a tackifier resin T_{L} may effectively improve the static peel resistance.

The art disclosed herein can be preferably implemented in an embodiment where the tackifier resin T_{L} comprises two species of rosin-based resin having different softening points. This can allow preferable formation of a high tack PSA with good static peel resistance.

The tackifier resin T_{H} preferably comprises, as the phenolic resin, at least one species selected from a group consisting of a terpene-phenol resin, a hydrogenated terpene-phenol resin, an alkylphenol resin and a rosin-phenol resin. The use of such a tackifier resin T_{H} may effectively improve the static peel resistance.

The tackifier resin T_{H} content is preferably less than 10 parts by weight to 100 parts by weight of the acrylic polymer. This can allow preferable formation of a high tack PSA with good static peel resistance.

The present description also provides a PSA sheet comprising a PSA layer formed from a PSA composition disclosed herein. Such a PSA sheet can be high tack and fairly resistant to static peel.

In the PSA sheet according to a preferable embodiment, the PSA layer comprises an isocyanate-based crosslinking agent. Typically, the PSA constituting the PSA layer is crosslinked by the isocyanate-based crosslinking agent. The PSA sheet in such an embodiment may combine tack and static peel resistance at a higher level.

### [Brief Description of Drawings]

Fig. 1 shows a schematic cross-sectional view illustrating the constitution of the PSA sheet according to an embodiment.
Fig. 2 shows a schematic cross-sectional view illustrating the constitution of the PSA sheet according to another embodiment.
Fig. 3 shows a schematic cross-sectional view illustrating the constitution of the PSA sheet according to another embodiment.
Fig. 4 shows a diagram illustrating a method of static peel test. [Description of Embodiments]

Preferred embodiments of the present invention are described below. Matters necessary to practice this invention other than those specifically referred to in this description may be understood as design matters to a person of ordinary skill in the art based on the conventional art in the pertinent field. The present invention can be practiced based on the contents disclosed in this description and common technical knowledge in the subject field.

In the description below, members and sites providing the same effect are may be indicated by a common reference numeral, and redundant descriptions may be omitted or simplified. The drawings illustrate the embodiments schematically for clear description of the present invention and do not represent accurate dimensions or scale of a PSA sheet provided actually as a product.

As mentioned earlier, the term "PSA" in this description refers to a material that has characteristics to be in a soft solid (viscoelastic) state in a room temperature range and adhere to adherend under some pressure. As defined in "Adhesion: Fundamental and Practice" by C. A. Dahlquist (McLaren & Sons (1966), P. 143), the PSA referred to herein is a material having a property that satisfies complex tensile modulus E* (1Hz) < 10⁷ dyne/cm² (typically, a material exhibiting the described characteristics at 25 °C). The PSA in the art disclosed herein can be considered as solid contents (non-volatiles) in a PSA composition or constituents of a PSA layer.

As used herein, the "base polymer" of a PSA refers to the primary component among rubbery polymers contained in the PSA. The rubbery polymer refers to a polymer that shows rubber elasticity in a room temperature range. The "primary component" in this description refers to a component exceeding 50 % by weight of the content, unless otherwise indicated.

The term "acrylic polymer" in this description refers to a polymer comprising, as a monomeric unit constituting the polymer, a monomeric unit derived from a monomer having at least one (meth)acryloyl group per molecule. In the following, a monomer having at least one (meth)acryloyl group per molecule may be called an "acrylic monomer." Thus, the acrylic polymer in this description is defined as a polymer comprising a monomeric unit derived from an acrylic monomer. Atypical example of the acrylic polymer is an acrylic polymer in which the acrylic monomer content exceeds 50 % by weight of all monomers used in synthesizing the acrylic polymer.

As used herein, the term "(meth)acryloyl" comprehensively refers to acryloyl and methacryloyl. Similarly, the terms "(meth)acrylate" and "(meth)acryl" comprehensively refer to acrylate and methacrylate, and acryl and methacryl, respectively.

### <Acrylic Polymer>

The PSA composition and PSA disclosed herein comprises an acrylic polymer as a base polymer. As the acrylic polymer, for example, a polymer of a monomeric starting material comprising an alkyl (meth)acrylate as the primary monomer and possibly comprising a secondary monomer copolymerizable with the primary monomer is preferable. The primary monomer herein refers to a component that accounts for higher than 50 % by weight of the monomer composition in the monomeric starting material.

As the alkyl (meth)acrylate, for instance, a compound represented by the following formula (1) can be used:

CH₂=C(H¹)COOR² (1)

Herein, R¹ in the formula (1) is a hydrogen atom or a methyl group. R² is a linear (acyclic) alkyl group having 1 to 20 carbon atoms. Hereinafter, such a range of the number of carbon atoms may be indicated as "C₁₋₂₀." From the standpoint of the storage elastic modulus of PSA, etc., an alkyl (meth)acrylate with R² being a C₁₋₁₄ (e.g. C₂₋₁₀, typically C₄₋₈) linear alkyl group is preferable, and an alkyl (meth)acrylate with R¹ being a hydrogen atom and R² being a C₄₋₈ linear alkyl group (or simply a C₄₋₈ alkyl acrylate hereinafter) is more preferable.

Examples of an alkyl (meth)acrylate with R² being a C₁₋₁₄ linear alkyl group include methyl (meth)acrylate, ethyl (meth)acrylate, propyl (meth)acrylate, isopropyl (meth)acrylate, n-butyl (meth)acrylate, pentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, lauryl (meth)acrylate, tetradecyl (meth)acrylate, etc. Among these alkyl (meth)acrylates, solely one species or a combination of two or more species can be used. Preferable alkyl (meth)acrylates include n-butyl acrylate (BA) and 2-ethylhexyl acrylate (2EHA).

The alkyl (meth)acrylate content in the total monomer content used in synthesizing the acrylic polymer is preferably 70 % by weight or greater, more preferably 85 % by weight or greater, or yet more preferably 90 % by weight or greater. The upper limit of alkyl (meth)acrylate content is not particularly limited. It is usually preferably 99.5 % by weight or less (e.g. 99 % by weight or less). Alternatively, the acrylic polymer may be essentially formed of just an alkyl (meth)acrylate. When a C₄₋₈ alkyl acrylate is used as a monomer, the C₄₋₈ alkyl acrylate content accounts for usually suitably 50 % by weight or more, preferably 70 % by weight or more, more preferably 90 % by weight or more, or yet more preferably 95 % by weight or more (typically 99 to 100 % by weight) of the alkyl (meth)acrylate content in the monomers.

A preferable example of the acrylic polymer is an acrylic polymer in which BA accounts for 50 % by weight or more (typically more than 50 % by weight, e.g. 60 % by weight or more) of the total monomer content. 2EHA may be further contained at a smaller ratio than BA in the total monomer content. Another preferable example of the acrylic polymer is an acrylic polymer in which 2EHA accounts for 50 % by weight or more (typically more than 50 % by weight, e.g. 60 % by weight or more) of the total monomer content. BA may be further contained at a smaller ratio than 2EHA in the total monomer content.

In the acrylic polymer in the art disclosed herein, other monomer(s) besides those described above (the other monomer(s)) may be copolymerized as far as the effect of the present invention is not notably impaired. The other monomer(s) can be used, for instance, for adjustment of the glass transition temperature (Tg) of the acrylic polymer, adjustment of adhesive properties, etc. For instance, monomers capable of increasing the cohesive strength and heat resistance of the PSA include a sulfonate group-containing monomer, a phosphate group-containing monomer, a cyano group-containing monomer, a vinyl ester, an aromatic vinyl compound, etc. A preferable example among these is the vinyl ester. Specific examples of the vinyl ester include vinyl acetate (VAc), vinyl propionate, vinyl laurate, and the like. Among these, VAc is particularly preferable.

Other monomers capable of introducing a functional group as a probable crosslinking point into the acrylic polymer or contributing to increase the adhesive strength include a hydroxyl group (OH group)-containing monomer, a carboxyl group-containing monomer, an acid anhydride group-containing monomer, an amide group-containing monomer, an amino group-containing monomer, an imide group-containing monomer, an epoxy group-containing monomer, a (meth)acryloylmorpholine, a vinyl ether, and so on.

A preferable example of the acrylic polymer in the art disclosed herein is an acrylic polymer in which a carboxyl group-containing monomer is copolymerized as the other monomer(s). Examples of the carboxyl group-containing monomer include acrylic acid (AA), methacrylic acid (MAA), carboxyethyl (meth)acrylate, carboxypentyl (meth)acrylate, itaconic acid, maleic acid, fumaric acid, crotonic acid, isocrotonic acid, etc. Particularly preferable carboxyl group-containing monomers include AA and MAA.

Another preferable example of the acrylic polymer in the art disclosed herein is an acrylic polymer in which a hydroxyl group-containing monomer is copolymerized as the other monomer(s). Examples of a hydroxyl group-containing monomer include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, etc.; polypropylene glycol mono(meth)acrylate; N-hydroxyethyl (meth)acrylamide; and the like. Particularly preferable hydroxyl group-containing monomers include a hydroxyalkyl (meth)acrylate having a linear alkyl group with two to four carbon atoms.

For the "other monomer(s)," solely one species or a combination of two or more species can be used. The total amount of the other monomer(s) is not particularly limited. For instance, it can be about 40 % by weight or less (typically 0.001 to 40 % by weight) of the total monomer content, or usually more preferably about 30 % by weight or less (typically 0.01 to 30 % by weight, e.g. 0.1 to 1.0 % by weight).

Although not particularly limited, when a carboxyl group-containing monomer is used as the other monomer(s), the carboxyl group-containing monomer content is suitably about 0.1 to 10 % by weight (e.g. 0.2 to 8 % by weight, typically 0.5 to 5 % by weight) of the total monomer content.

Although not particularly limited, when a hydroxyl group-containing monomer is used as the other monomer(s), the hydroxyl group-containing monomer content is suitably about 0.001 to 10 % by weight (e.g. 0.01 to 5 % by weight, typically 0.02 to 2 % by weight) of the total monomer content.

The copolymer composition of the acrylic polymer is designed such that the polymer has a glass transition temperature (Tg) of suitably -15 °C or below (typically-70 °C or above, but -15 °C or below), preferably -25 °C or below (typically -65 °C or above, but -25 °C or below), or more preferably -40 °C or below (e.g. -65 °C or above, but -40 °C or below). From the standpoint of increasing the tack of the PSA, it is preferable that the acrylic polymer has a Tg value at or below the upper limit. The Tg of the acrylic polymer can be adjusted by suitably changing the monomer composition (i.e. types and relative amounts of monomers used for the synthesis of the polymer).

Herein, the Tg of the acrylic polymer refers to a value determined by the Fox equation based on the Tg values of homopolymers of the respective monomers constituting the polymer and weight fractions (copolymerization ratio by weight) of the monomers. As the Tg values of the homopolymers, values given in a known document are used.

In the art disclosed herein, as the Tg values of the homopolymers, the following values are used specifically:

| | |
|---|---|
| 2-ethylhexyl acrylate | -70 °C |
| n-butyl acrylate | -55 °C |
| ethyl acrylate | -22 °C |
| methyl acrylate | 8 °C |
| methyl methacrylate | 105 °C |
| 2-hydroxyethyl acrylate | -15 °C |
| 4-hydroxybutyl acrylate | -40 °C |
| vinyl acetate | 32 °C |
| styrene | 100 °C |
| acrylic acid | 106 °C |
| methacrylic acid | 228 °C |

With respect to monomers other than those listed above, for the Tg values of the corresponding homopolymers, values given in "Polymer Handbook" (3rd edition, John Wiley & Sons, Inc., Year 1989) are used. When no value is given in the reference book, the Tg of a homopolymer can be determined as follows: A sheet of the homopolymer is synthesized by solution polymerization and molded into a sheet. While applying a shear strain at a frequency of 1 Hz using a rheometer, the viscoelasticity is measured in the shear mode over a temperature range of -70 °C to 150 °C at a heating rate of 5 °C/min. The Tg is the temperature at the peak of shear loss modulus G" (temperature at which the G" curve maximizes).

The method for obtaining the acrylic polymer is not particularly limited. Various polymerization methods known as synthetic means for acrylic polymers can be suitably employed, with the methods including a solution polymerization method, emulsion polymerization method, bulk polymerization method, suspension polymerization method, photopolymerization method, etc. For instance, a solution polymerization method can be preferably used. As a method for supplying monomers when carrying out solution polymerization, can be suitably employed an all-at-once supply method to supply all starting monomers at once, continuous supply (dropping) method, portionwise supply (dropping) method, etc. The polymerization temperature can be suitably selected depending on the types of monomers and solvent being used, type of polymerization initiator, etc. For example, it can be about 20 °C to 170 °C (typically 40 °C to 140 °C).

The solvent (polymerization solvent) used for solution polymerization can be suitably selected among heretofore known organic solvents. For instance, one species of solvent or a mixture of two or more species of solvent can be used, selected from aromatic compounds (typically aromatic hydrocarbons) such as toluene, etc.; aliphatic or alicyclic hydrocarbons such as ethyl acetate, etc.; halogenated alkanes such as 1,2-dichloroethane, etc.; lower alcohols (e.g. primary alcohols with one to four carbon atoms) such as isopropanol, etc.; ethers such as tert-butyl methyl ether, etc.; ketones such as methyl ethyl ketone, etc.; and the like.

The initiator used for the polymerization can be suitably selected from heretofore known polymerization initiators in accordance with the type of polymerization method. For instance, one, two or more species of azo-based polymerization initiator, such as 2,2'-azobisisobutylonitrile, etc., can be preferably used. Other examples of the polymerization initiator include persulfate salts such as potassium persulfate, etc.; peroxide-based initiators such as benzoyl peroxide, hydrogen peroxide, etc.; substituted ethane-based initiators such as phenyl-substituted ethane, etc.; aromatic carbonyl compounds; and so on. Yet other examples of the polymerization initiator include a redox-based initiator by a combination of a peroxide and a reducing agent. These polymerization initiators can be used singly as one species or in a combination of two or more species. The polymerization initiator can be used in a typical amount, selected from a range of, for instance, about 0.005 to 1 part by weight (typically 0.01 to 1 part by weight) relative to 100 parts by weight of the total monomer content.

In the art disclosed herein, the weight average molecular weight (Mw) of the acrylic polymer is not particularly limited. It can be in a range of, for instance, 10 × 10⁴ to 500 × 10⁴. From the standpoint of combining tack and static peel resistance at a high level, the base polymer preferably has a Mw of 10 × 10⁴ to 150 × 10⁴ (e.g. 20 × 10⁴ to 75 × 10⁴, typically 35 × 10⁴ to 65 × 10⁴). The Mw herein refers to the value based on standard polystyrene determined by GPC (gel permeation chromatography). As the GPC system, for instance, a model name "HLC-8320GPC" (column: TSKgel GMH-H(S) available from Tosoh Corporation) can be used.

### <Tackifier Resin>

The PSA composition disclosed herein comprises a tackifier resin in addition to the base polymer.

As the tackifier resin, one, two or more species can be used, selected from various known tackifier resins such as rosin-based resins, terpene resins, modified terpene resins, phenolic resins, petroleum resins, styrene-based resins, coumarone-indene resins, ketone-based resins, and so on.

The concept of rosin-based resin herein encompasses both a rosin and a rosin-derived resin. However, a species considered as a rosin-phenol resin described later is treated as a phenolic resin instead of as a rosin-based resin.

Examples of a rosin include unmodified rosins (raw rosins) such as gum rosin, wood rosin, tall-oil rosin, etc.; modified rosins obtainable from these unmodified rosins via modifications such as hydrogenation, disproportionation, polymerization, etc. (hydrogenated rosins, disproportionated rosins, polymerized rosins, other chemically-modified rosins, etc.); and the like.

The rosin-derived resin is typically a derivative of a rosin as those listed above. The concept of rosin-based resin herein encompasses a derivative of an unmodified rosin and a derivative of a modified rosin (including a hydrogenated rosin, a disproportionated rosin, and a polymerized rosin).

Examples of a rosin-derived resin include rosin esters such as an unmodified rosin ester which is an ester of an unmodified rosin and an alcohol, and a modified rosin ester which is an ester of a modified rosin and an alcohol; an unsaturated fatty acid-modified rosin obtainable by modifying a rosin with an unsaturated fatty acid; an unsaturated fatty acid-modified rosin ester obtainable by modifying a rosin ester with an unsaturated fatty acid; rosin alcohols obtainable by reduction of carboxyl groups in rosins or aforementioned various rosin derivatives (including rosin esters, unsaturated fatty acid-modified rosin, and an unsaturated fatty acid-modified rosin ester); metal salts of rosins or aforementioned various rosin derivatives; and so on.

Specific examples of a rosin ester include, but not limited to, a methyl ester, triethylene glycol ester, glycerin ester or pentaerythritol ester, etc., of an unmodified rosin or a modified rosin (hydrogenated rosin, disproportionated rosin, polymerized rosin, etc.).

Examples of a terpene resin include terpenes (typically monoterpenes) such as α-pinene, ß-pinene, d-limonene, l-limonene, dipentene, etc. It can be a homopolymer of one species of terpene or a copolymer of two or more species of terpene. Examples of a homopolymer of one species of terpene include α-pinene polymer, ß-pinene polymer, dipentene polymer, etc.

Examples of a modified terpene resin include resins obtainable by modifying the terpene resins. Specific examples include styrene-modified terpene resins, hydrogenated terpene resins, etc. However, a species considered as a terpene-phenol resin or a hydrogenated terpene-phenol resin described later is treated as a phenolic resin instead of as a modified terpene resin.

Examples of the phenolic resin referred to herein include a terpene-phenol resin, a hydrogenated terpene-phenol resin, an alkylphenol resin and a rosin-phenol resin.

The terpene-phenol resin refers to a polymer comprising a terpene residue and a phenol residue, and its concept encompasses a copolymer of a terpene and a phenol compound (terpene-phenol copolymer resin) as well as a terpene homopolymer or copolymer modified with a phenol (phenol-modified terpene resin). Preferable examples of a terpene forming such a terpene-phenol resin include α-pinene, ß-pinene, limonenes (including d-isomer, l-isomer, d/l-limonene (dipentene)) and the like. The hydrogenated terpene-phenol resin refers to a hydrogenated terpene-phenol resin having a structure of such a terpene-phenol resin with added hydrogen atoms. It is sometimes called a hydrogen-added terpene-phenol resin.

The alkylphenol resin is a resin (solvent-based phenolic resin) obtainable from an alkylphenol and formaldehyde. Examples of the alkylphenol resin include a novolac type and a resol type.

The rosin-phenol resin is typically a resin obtainable by phenol modification of a rosin or one of the various rosin derivatives listed above (including a rosin ester, an unsaturated fatty acid-modified rosin and an unsaturated fatty acid-modified rosin ester). Examples of the rosin-phenol resin include a rosin-phenol resin obtainable by acid catalyzed addition of a phenol to a rosin or one of the various rosin derivatives listed above, followed by thermal polymerization, etc. As the rosin-phenol resin in the art disclosed herein, for instance, a phenol-modified rosin ester (rosin ester-phenol resin) can be preferably used.

The PSA composition disclosed herein typically comprises, as the tackifier resin, a tackifier resin T_{L} having a softening point of lower than 105 °C. The tackifier resin T_{L} preferably comprises a rosin-based resin. The tackifier resin T_{L} may comprise one species of rosin-based resin solely or two or more species of rosin-based resin in combination.

Although not particularly limited, rosin-based resins that can be preferably used include rosin esters such as unmodified rosin esters, modified rosin esters, and the like. Preferable examples of modified rosin esters include hydrogenated rosin esters. For instance, rosin esters such as a methyl ester of an unmodified rosin or a modified rosin (e.g. a hydrogenated rosin), a glycerin ester of such unmodified rosin or a modified rosin, and the like are preferable.

The rosin-based resin (preferably a rosin ester) having a softening point of lower than 105 °C included in the tackifier resin T_{L} may effectively contribute to increase the tack (e.g. ball tack assessed by a method described later in the working examples) of the PSA. From the standpoint of obtaining a greater tack-increasing effect, the softening point of the rosin-based resin is preferably about 103 °C or lower (e.g. about 100 °C or lower), more preferably 90 °C or lower, or yet more preferably 85 °C or lower. The lower limit of softening point of the rosin-based resin is not particularly limited. From the standpoint of preferably combining tack and static peel resistance, usually, a rosin-based resin having a softening point of 60 °C or higher (more preferably 70 °C or higher, e.g. 75 °C or higher) can be preferably used. Not too low a softening point of the rosin-based resin is advantageous also from the standpoint of increasing the tack.

When the tackifier resin T_{L} comprises two or more species of rosin-based resin, the softening points of these rosin-based resins may be the same or different For instance, an embodiment where the tackifier resin T_{L} comprises at least two species of rosin-based resin having different softening points can be preferably employed. From the standpoint of preferably balancing tack and static peel resistance, it is preferable to select the two species of rosin-based resin so that their softening points are different by 5 °C or more (more preferably 10 °C or more, e.g. 15 °C or more). From the standpoint of preferably balancing tack and static peel resistance, it is preferable to select the two species of rosin-based resin so that the difference between their softening points is 40 °C or less (more preferably 30 °C or less, e.g. 25 °C or less).

In the PSA composition according to a preferable embodiment, the tackifier resin T_{L} comprises a hydrogenated rosin ester. A hydrogenated rosin ester having a softening point of lower than 105 °C can be used. From the standpoint of increasing the tack, a species having a softening point of about 100 °C or lower (typically lower than 100 °C, more preferably 90 °C or lower, e.g. 85 °C or lower) is preferable. The lower limit of softening point of the hydrogenated rosin ester is not particularly limited. Usually, from the standpoint of increasing the tack, it is preferably 60 °C or higher, and in view of the static peel resistance, it is more preferably 70 °C or higher (e.g. 75 °C or higher).

In the PSA composition according to another preferable embodiment, the tackifier resin T_{L} comprises a non-hydrogenated rosin ester. The non-hydrogenated rosin ester herein is a concept that comprehensively encompasses the aforementioned rosin esters excluding hydrogenated rosin esters. Examples of the non-hydrogenated rosin ester include unmodified rosin esters, disproportionated rosin esters and polymerized rosin esters. As the non-hydrogenated rosin ester, a species having a softening point of lower than 105 °C (e.g. about 100 °C or lower) can be suitably selected and used. The lower limit of softening point of the non-hydrogenated rosin ester is not particularly limited. Usually, from the standpoint of increasing the tack, it is preferably 60 °C or higher, and in view of the static peel resistance, it is more preferably 70 °C or higher, or yet more preferably higher than 80 °C (e.g. 90 °C or higher).

The art disclosed herein can be preferably implemented in an embodiment where the tackifier resin T_{L} comprises a hydrogenated rosin ester and a non-hydrogenated rosin ester in combination. According to such an embodiment, greater static peel resistance can be obtained. There are no particular limitations to the relation between the softening points of the hydrogenated rosin ester and non-hydrogenated rosin ester to be used. For instance, they can be selected so that the softening point of the hydrogenated rosin ester is lower by 5 °C or more (e.g. lower by 10 °C to 30 °C) than the softening point of the non-hydrogenated rosin ester.

The amount of tackifier resin T_{L} used is not particularly limited. Usually, to 100 parts by weight of the base polymer, 10 to 45 parts by weight of the tackifier resin T_{L} is suitably used. By using 15 to 40 parts by weight (e.g. 20 to 35 parts by weight) of the tackifier resin T_{L}, a PSA can be obtained, more preferably combining tack and static peel resistance.

For instance, in an embodiment where the tackifier resin T_{L} comprises a hydrogenated rosin ester, the amount of hydrogenated rosin ester used relative to 100 parts by weight of the base polymer can be, for instance, 0.5 to 40 parts by weight, preferably 1 to 25 parts by weight, or more preferably 2 to 15 parts by weight, for example, 2 to 10 parts by weight.

For instance, in an embodiment where the tackifier resin T_{L} comprises a non-hydrogenated rosin ester, the amount of non-hydrogenated rosin ester used relative to 100 parts by weight of the base polymer can be, for instance, 1 to 35 parts by weight, preferably 5 to 35 parts by weight, or more preferably 10 to 30 parts by weight, for example, 15 to 25 parts by weight.

In an embodiment where the tackifier resin T_{L} comprises a hydrogenated rosin ester and a non-hydrogenated rosin ester, their quantitative ratio is not particularly limited. For instance, the hydrogenated rosin ester content in the total amount of the hydrogenated rosin ester and non-hydrogenated rosin ester can be 2 to 95 % by weight, usually suitably 5 to 80 % by weight, or preferably 10 to 75 % by weight (e.g. 15 to 50 % by weight). When used at such a quantitative ratio, they can adjust the compatibility of the tackifier resin T_{L} to the base polymer to a suitable level so as to effectively increase the tack.

The tackifier resin T_{L} may comprise other tackifier resin(s) in addition to the rosin-based resin. The rosin-based resin content in the total tackifier resin T_{L} content is usually suitably greater than 50 % by weight, preferably 65 % by weight or greater, or more preferably 75 % by weight or greater. The art disclosed herein can be preferably implemented in an embodiment where essentially all (typically 97 % by weight or more, e.g. 100 % by weight) of the tackifier resin T_{L} content is a rosin-based resin.

The PSA composition disclosed herein typically comprises, as the tackifier resin, a tackifier resin T_{H} having a softening point of 105 °C or higher, but 170 °C or lower. The tackifier resin T_{H} preferably comprises a phenolic resin. Preferable examples of the phenolic resin include a terpene-phenol resin, a hydrogenated terpene-phenol resin, an alkylphenol resin and a rosin-phenol resin (e.g. rosin ester-phenol resin). The tackifier resin T_{H} may comprise one species of phenolic resin singly or two or more species in combination.

The phenolic resin having a softening point of 105 °C or higher included in the tackifier resin T_{H} may effectively contribute to increase the static peel resistance of the PSA. From the standpoint of obtaining greater static peel resistance, the softening point of the phenolic resin is preferably about 110 °C or higher (e.g. about 115 °C or higher). With the phenolic resin having a softening point of 170 °C or lower, tack and static peel resistance can be suitably combined. From the standpoint of the compatibility with the base polymer, it is usually suitable to use a phenolic resin having a softening point of 160 °C or lower (e.g. about 150 °C or lower). From the standpoint of the tack improvement and low temperature characteristics, a phenolic resin having a softening point of lower than 140 °C (e.g. about 135 °C or lower) can be preferably used.

The amount of tackifier resin T_{H} used is not particularly limited. It is usually suitably 20 parts by weight or less (typically 0.1 to 20 parts by weight) relative to 100 parts by weight of the base polymer. When used in such an amount, it can effectively improve the static peel resistance and inhibit an excessive decrease in tack. From the standpoint of obtaining better tack, the amount of tackifier resin T_{H} used to 100 parts by weight of the base polymer is preferably 15 parts by weight or less, or more preferably 10 parts by weight or less (typically less than 10 parts by weight, e.g. 7 parts by weight or less). From the standpoint of obtaining greater static peel resistance, the amount of tackifier resin T_{H} used to 100 parts by weight of the base polymer is preferably 1 part by weight or greater, or more preferably 3 parts by weight or greater.

The tackifier resin T_{H} may comprises other tackifier resin(s) in addition to the phenolic resin. The phenolic resin content in the total tackifier resin T_{H} content is usually suitably greater than 50 % by weight, preferably 65 % by weight or greater, or more preferably 75 % by weight or greater. The art disclosed herein can be preferably implemented in an embodiment where essentially all (typically 97 % by weight or more, e.g. 100 % by weight) of the tackifier resin T_{H} is a terpene-phenol resin, an alkylphenol resin, a rosin-phenol resin, or a combination of these.

Although not particularly limited, the combined amount of tackifier resin T_{L} and tackifier resin T_{H} is usually suitably about 10 to 60 parts by weight relative to 100 parts by weight of the base polymer. This can lead to a preferable combination of tack and static peel resistance. To obtain higher tack, it is advantageous that the combined amount is 55 parts by weight or less (typically 50 parts by weight or less). From the standpoint of combining tack and static peel resistance at a higher level, the combined amount is preferably 20 to 45 parts by weight, or more preferably 25 to 40 parts by weight. From the standpoint of the workability and low temperature characteristics, the combined amount is preferably 35 parts by weight or less (e.g. 25 to 35 parts by weight).

The tackifier resin T_{H} content in the combined amount of tackifier resin T_{L} and tackifier resin T_{H} is not particularly limited. From the standpoint of preferably combining tack and static peel resistance, the tackifier resin T_{H} content is usually suitably 3 to 30 % by weight, or preferably 5 to 25 % by weight (e.g. 10 to 20 % by weight).

The tackifier resin in the art disclosed herein may comprise other tackifier resin(s) (e.g. a tackifier resin having a softening point of higher than 170 °C) besides the tackifier resin T_{L} and tackifier resin T_{H}. The combined tackifier resin T_{L} and tackifier resin T_{H} content of the total tackifier resin content in the PSA composition is typically 75 % by weight or greater, preferably 90 % by weight or greater, or more preferably 95 % by weight or greater. The PSA composition according to a preferable embodiment is essentially free of a tackifier resin other than the tackifier resin T_{L} and tackifier resin T_{H}.

The softening point of a tackifier resin as referred to herein is defined as a value measured based on the softening point test method (ring and ball method) specified in JIS K 5902 and JIS K 2207. In particular, a sample is quickly melted at a lowest possible temperature, and with caution to avoid bubble formation, the melted sample is poured into a ring to the top, with the ring being placed on top of a flat metal plate. After cooled, any portion of the sample risen above the plane including the upper rim of the ring is sliced off with a small knife that has been somewhat heated. Following this, a support (ring support) is placed in a glass container (heating bath) having a diameter of 85 mm or larger and a height of 127 mm or larger, and glycerin is poured into this to a depth of 90 mm or deeper. Then, a steel ball (9.5 mm diameter, weighing 3.5 g) and the ring filled with the sample are immersed in the glycerin while preventing them from making contact. The temperature of glycerin is maintained at 20 °C ± 5 °C for 15 minutes. The steel ball is then placed at the center of the surface of the sample in the ring, and this is placed on a prescribed location of the support. While keeping the distance between the ring top and the glycerin surface at 50 mm, a thermometer is placed so that the center of the mercury ball of the thermometer is as high as the center of the ring, and the container is heated evenly by projecting a Bunsen burner flame at the midpoint between the center and the rim of the bottom of the container. After the temperature has reached 40 °C from the start of heating, the rate of the bath temperature rise must be kept at 5.0 °C ± 0.5 °C per minute. As the sample gradually softens, the temperature at which the sample flows out of the ring and finally touches the bottom plate is read as the softening point. Two or more measurements of softening point are performed at the same time, and their average value is used.

### <Crosslinking Agent>

In the art disclosed herein, the PSA composition used for forming the PSA layer may comprise a crosslinking agent as necessary. The type of crosslinking agent is not particularly limited. A species can be suitably selected and used among heretofore known crosslinking agents. Examples of such a crosslinking agent include isocyanate-based crosslinking agents, epoxy-based crosslinking agents, oxazoline-based crosslinking agents, aziridine-based crosslinking agents, melamine-based crosslinking agents, peroxide-based crosslinking agents, urea-based crosslinking agents, metal alkoxide-based crosslinking agents, metal chelate-based crosslinking agents, metal salt-based crosslinking agents, carbodiimide-based crosslinking agents, amine-based crosslinking agents, and the like. Crosslinking agents can be used singly as one species or in a combination of two or more species. The amount of crosslinking agent used is not particularly limited. For instance, to 100 parts by weight of the base polymer, it can be about 10 parts by weight or less, preferably about 0.001 to 10 parts by weight, or, for example, can be selected from a range of about 0.01. to 5 parts by weight. From the standpoint of preferably combining tack and static peel resistance, it is preferable to use an isocyanate-based crosslinking agent and/or an epoxy-based crosslinking agent.

When an isocyanate-based crosslinking agent is used, its amount is not particularly limited and can be, for instance, greater than 0 part by weight, but 10 parts by weight or less (typically 0.01 to 10 parts by weight) relative to 100 parts by weight of the base polymer. From the standpoint of increasing the static peel resistance, the amount of isocyanate-based crosslinking agent to 100 parts by weight of the base polymer is preferably 0.5 part by weight or greater (e.g. 0.8 part by weight or greater). From the standpoint of increasing the tack, the amount of isocyanate-based crosslinking agent to 100 parts by weight of the base polymer is preferably 5 parts by weight or less, or more preferably 3 parts by weight or less.

When an epoxy-based crosslinking agent is used, its amount is not particularly limited and can be, for instance, greater than 0 part by weight, but 3 parts by weight or less (typically 0.001 to 3 parts by weight) relative to 100 parts by weight of the base polymer. From the standpoint of increasing the static peel resistance, the amount of epoxy-based crosslinking agent to 100 parts by weight of the base polymer is preferably 0.005 part by weight or greater (e.g. 0.008 part by weight or greater). From the standpoint of increasing the tack, the amount of epoxy-based crosslinking agent to 100 parts by weight of the base polymer is preferably 1 part by weight or less, or more preferably 0.5 part by weight or less (e.g. 0.1 part by weight or less).

The art disclosed herein can be preferably practiced in an embodiment using, as the crosslinking agent, at least an isocyanate-based crosslinking agent. Preferable examples include an embodiment where an isocyanate-based crosslinking agent is used solely, an embodiment where an isocyanate-based crosslinking agent and an epoxy-based crosslinking agent are used together, and so on. When an isocyanate-based crosslinking agent and an epoxy-based crosslinking agent are used together, their quantitative ratio is not particularly limited. For instance, the amount of epoxy-based crosslinking agent used to 1 part by weight of isocyanate-based crosslinking agent can be 0.001 to 0.1 part by weight (typically 0.003 to 0.03 part).

### <Other Components>

The PSA composition may comprise, as necessary, various additives generally used in the field of PSA compositions, such as a leveling agent, crosslinking-accelerating agent, plasticizer, softening agent, filler, anti-static agent, anti-aging agent, UV-absorbing agent, antioxidant, photo-stabilizing agent and so on. With respect to these various additives, heretofore known species can be used by typical methods. Since these do not particularly characterize the present invention, further details are omitted.

In a preferable embodiment, the PSA composition may have a composition such that the combined amount of the base polymer and tackifier resin accounts for 90 % by weight or more of the PSA formed from the PSA composition. For instance, an embodiment where the combined amount of the base polymer and tackifier resin is 90 to 99.8 % by weight (typically, for instance, 95 to 99.5 % by weight) of the PSA can be preferably used. The weight of a PSA formed from a PSA composition is usually about the same as the weight of non-volatiles (NV) in the PSA composition.

The form of the PSA composition disclosed herein is not particularly limited. For instance, it can be a PSA composition in a solvent-based form comprising a PSA (adhesive components) having an aforementioned composition in an organic solvent, a PSA composition in a water-dispersed form (typically an aqueous emulsion form) where the PSA is dispersed in an aqueous solvent, a hot-melt PSA composition, and so on. From the standpoint of the PSA's applicability or latitude in the choice of a substrate, etc., a solvent-based or a water-dispersed PSA composition can be used preferably.

From the standpoint of obtaining greater adhesive properties, a solvent-based PSA composition is particularly preferable. Such a solvent-based PSA composition can be prepared in a form of a solution containing the respective components described above in an organic solvent. The organic solvent can be suitably selected from known or commonly used organic solvents. For instance, one species of solvent or a mixture of two or more species of solvent can be used, selected from aromatic compounds (typically aromatic hydrocarbons) such as toluene, xylene, etc.; acetic acid esters such as ethyl acetate, butyl acetate, etc.: aliphatic or alicyclic hydrocarbons such as hexane, cyclohexane, methyl cyclohexane, etc.; halogenated alkanes such as 1,2-dichloroethane, etc.; ketones such as methyl ethyl ketone, acetyl acetone, etc.; and the like.

As the method for obtaining a PSA sheet from the PSA composition, various heretofore known methods can be applied. For instance, can be preferably employed a direct method where the PSA composition is provided (typically applied) to a substrate and allowed to dry to form a PSA layer. Alternatively, can be employed a transfer method such that the PSA composition is provided to a highly releasable surface (e.g. a release liner's surface, release agent-treated back face of a support substrate, etc.) and allowed to dry to form a PSA layer on the surface, and the PSA layer is transferred to a substrate.

The PSA composition can be applied with a known or commonly-used coater such as a gravure coater, reverse roll coater, kiss roll coater, dip roll coater, bar coater, knife coaster, spray coater and the like. The PSA layer is typically formed continuously. Depending on the purpose and application, it may be formed in a regular or random pattern of dots, stripes, etc.

### <PSA Sheet>

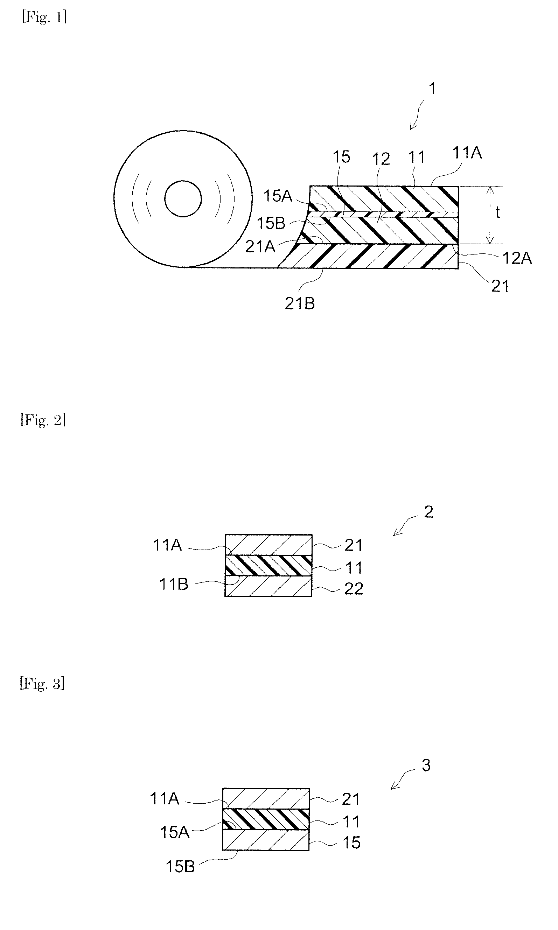

The PSA sheet disclosed herein (possibly in a long form such as a tape form, etc.) may be in a form of an adhesively double-faced PSA sheet having a cross-sectional structure shown in Fig. 1. Double-faced PSA sheet 1 comprises a substrate 15, and a first PSA layer 11 and a second PSA layer 12 supported by the two respective faces of substrate 15. More specifically, substrate 15 has a first face 15A and a second face 15B (both non-releasable) provided with the first PSA layer 11 and second PSA layer 12, respectively. As shown in Fig. 1, double-faced PSA sheet 1 prior to use (before adhered to an adherend) may be in a form where it is layered with a release liner 21 having a front face 21A and a back face 21B both releasable and wound together in a roll. In double-faced PSA sheet 1 having such a form, the surface (second adhesive face 12A) of the second PSA layer 12 and the surface (first adhesive face 11A) of the first PSA layer 11 are protected with the front face 21A and back face 21B of release liner 21, respectively. Alternatively, it may be in a form where the first adhesive face 11A and second adhesive face 12A are protected with two separate release liners.

Besides being preferably applied to the substrate-supported double-faced PSA sheet as shown in Fig. 1, the art disclosed herein can be also applied to a substrate-free (i.e. having no substrate) double-faced PSA sheet 2 formed of a PSA layer 11 as shown in Fig. 2. In double-face PSA sheet 2 prior to use, as shown in Fig. 2, the first and second adhesive faces 11A and 11B of PSA layer 11 are protected with release liners 21 and 22, respectively, with each release liner comprising a release face at least on the PSA-layer-side surface (front face). Alternatively, it may be in an embodiment without release liner 22, wherein both the two faces of release liner 21 are release faces, and PSA layer 11 is overlaid therewith and wound in a roll so that the back face of release liner 21 contacts and protects second adhesive face 11B.

As shown in Fig. 3, the art disclosed herein can be applied to a single-faced, substrate-supported PSA sheet 3 comprising a substrate 15 and a PSA layer 11 supported by a first face (non-releasable face) 15A of the substrate. Prior to use, double-faced PSA sheet 3 can be, for instance, in an embodiment as shown in Fig. 3 where the surface (adhesive face) 11A of the PSA layer 11 is protected with a release liner 21 comprising a release face at least on the PSA-layer-side surface (front face). Alternatively, it may be in an embodiment without a release liner 21, wherein with the use of substrate 15 having a release face on the second face 15B, substrate-supported PSA sheet 3 is wound in a roll so that the second face 15 B of substrate 15 contacts and protects the first adhesive face 11A.

When the art disclosed herein is applied to either a substrate-supported double-faced PSA sheet or a substrate-supported single-faced PSA sheet, as the substrate (support substrate) to support (back) the PSAlayer(s), a suitable substrate can be used in accordance with the purpose of the PSA sheet, selected, for instance, from the following: a polyolefin film comprising as the primary component a polyolefin such as a polypropylene, ethylene-propylene copolymer, etc.; a polyester film comprising as the primary component a polyester such as polyethylene terephthalate (PET), polybutylene terephthalate, etc.; a plastic film such as a polyvinyl chloride film comprising as the primary component a polyvinyl chloride, etc.; a foam sheet formed of a foam such as a polyurethane foam, polyethylene foam, polychloroprene foam, etc.; a woven fabric or non-woven fabric (encompassing types of paper such as Japanese paper, high-grade paper, etc.) of a single fibrous material or a blend of various fibrous materials (possibly natural fibers such as hemp, cotton, etc.; synthetic fibers such as polyester, vinylon, etc.; semi-synthetic fibers such as acetate, etc.; and the like); metal foil such as aluminum foil, copper foil, etc.; and the like. The surface on which a PSA layer is formed may be subjected to a surface treatment such as primer coating, corona discharge treatment, etc.

The thickness of substrate can be suitably selected depending on the purpose. It is generally about 2 µm to 500 µm (typically 10 µm to 200 µm).

As the plastic film, either a non-stretched film or a stretched (uni-axially stretched or bi-axially stretched) film can be used. As used herein, the plastic film typically refers to a film that is substantially unexpanded (not foamed). In other words, the plastic film in this description may be essentially internally free of bubbles (void-less). Thus, the concept of plastic film as referred to herein is distinct from a so-called foam sheet. In typical, the plastic film is essentially non-porous film and its concept is distinct from the non-woven fabric or woven fabric. The plastic film is typically a member capable of retaining its shape independently (not dependent). The PSA sheet disclosed herein may be a single-faced PSA sheet or a double-faced PSA sheet comprising a substrate (support substrate) essentially formed of such a plastic film. The plastic film may have a thickness of, for instance, about 5 µm to 100 µm (typically 10 µm to 50 µm).

Examples of the non-woven fabric utilized for the substrate disclosed herein include non-woven fabrics constituted with natural fibers including pulp such as wood pulp and the like, cotton, hemp, etc.; non-woven fabrics constituted with artificial fibers (synthetic fibers) including polyester fibers such as polyethylene terephthalate (PET) fibers, etc., rayon, vinylon, acetate fibers, polyvinyl alcohol (PVA) fibers, polyamide fibers, polyolefin fibers, polyurethane fibers, etc.; non-woven fabrics constituted with two or more materially different species of fibers used together; and the like. The use of non-woven fabric as the substrate can advantageously contribute to increase the tack. For instance, a hemp-based non-woven fabric comprising hemp (e.g. Manila hemp) as the primary component, a PET-based non-woven fabric comprising PET fibers as the primary component, and the like can be preferably used. The non-woven fabric is typically a member capable of retaining its shape independently (not dependent). The PSA sheet disclosed herein may be a double-faced PSA sheet comprising a substrate (support substrate) essentially formed of such a non-woven fabric.

Although not particularly limited, as the non-woven fabric (non-woven fabric substrate), a non-woven fabric having a grammage of about 7 g/m² to 30 g/m² can be used. Usually, a non-woven fabric having a grammage of 10 g/m² to 25 g/m² (e.g. 10 g/m² to 20 g/m²) can be preferably used.

The thickness of the non-woven fabric substrate is not particularly limited. It can be, for instance, about 150 µm or smaller. From the standpoint of the degree of PSA impregnation, etc., a preferable non-woven fabric substrate has a thickness of 100 µm or smaller (e.g. 70 µm or smaller, typically 50 µm or smaller). When the non-woven fabric substrate has a smaller thickness, the non-woven fabric substrate can be more readily impregnated with sufficient PSA. This is preferable from the standpoint of increasing the static peel resistance. In view of the workability during preparation of the PSA sheet, the thickness is preferably 10 µm or larger (e.g. 15 µm or larger, typically 20 µm or larger). With increasing thickness of non-woven fabric substrate, the tack tends to increase.

Although not particularly limited, the thickness of the PSA layer is suitably about 10 µm to 150 µm. In a substrate-supported double-faced PSA sheet, a PSA layer of such a thickness can be formed on each face of the substrate. The compositions and thicknesses of these PSA layers may be identical or different. With increasing thickness of PSA layer, the tack tends to increase. On the other hand, from the standpoint of the static peel resistance, it is advantageous that the PSA layer's thickness is not too large. From such a standpoint, the thickness of the PSA layer is preferably 20 µm to 120 µm, or more preferably 30 µm to 100 µm, for instance, 50 µm to 80 µm. Each PSA layer may have a single-layer structure consisting of one layer or a multi-layer structure including two or more layers.

Although not particularly limited, the PSA layer may have a gel fraction of, for instance, about 20 to 60 % by weight. From the standpoint of combining static peel resistance and tack at a high level, the gel fraction is preferably 20 to 50 % by weight, or more preferably 25 to 45 % by weight (e.g. 30 to 40 % by weight). The gel fraction of the PSA layer can be adjusted, for instance, by the composition and molecular weight of the base polymer, the use or absence of use of a crosslinking agent as well as its type and amount if any. The upper limit of gel fraction is theoretically 100 % by weight.

The gel fraction of a PSA layer can be determined by wrapping a measurement sample weighing W1 with a porous tetrafluoroethylene resin sheet and suspending the resultant in ethyl acetate at room temperature for one week, subsequently drying the measurement sample, measuring the weight W2 of its ethyl acetate-insoluble portion, and substituting W1 and W2 into the next equation: gel fraction (%) = W2/W1 × 100. As the porous tetrafluoroethylene resin sheet, can be used trade name "NITOFURON® NTF1122" available from Nitto Denko Corporation.

In a substrate-supported double-faced PSA sheet, the total thickness of the double-faced PSA sheet is not particularly limited. It can be, for instance, about 50 µm to 500 µm. The total thickness of a double-faced PSA sheet herein refers to the thickness from the first adhesive face through the second adhesive face, referring to, in the example shown in Fig. 1, the thickness t from the first adhesive face 11A through the second adhesive face 12A. In other words, the total thickness of a double-faced PSA sheet referred to herein includes the thicknesses of the first PSA layer, second PSA layer and substrate (support, substrate), but not the thickness of the release liner. From the standpoint of the versatility of the double-faced PSA sheet, the total thickness of the double-faced PSA sheet is preferably 300 µm or smaller, or more preferably 250 µm or smaller (e.g. 200 µm or smaller). From the standpoint of increasing the tack, the total thickness of the double-faced PSA sheet is advantageously 70 µm or larger, preferably 100 µm or larger, or more preferably 120 µm or larger.

As the release liner, any conventional release paper or the like can be used without any particular limitations. For example, can be used a release liner having a release layer on a surface of a substrate such as plastic film or paper, etc.; a release liner formed from a poorly-adhesive material such as a fluorine-based polymer (polytetrafluoroethylene, etc.) or a polyolefin-based resin (polyethylene, polypropylene, etc.); or the like. The release layer can be formed, for instance, by subjecting the substrate to a surface treatment with a release agent such as a silicone-based, a long-chain alkyl-based, a fluorine-based, a molybdenum disulfide-based release agent or the like.

Although not particularly limited, the PSA sheet according to a preferable embodiment may have a ball tack of 25 or greater (preferably 28 or greater, more preferably 29 or greater, e.g. 30 or greater) when measured by a method described later in the working examples. The upper limit of ball tack is not particularly limited. In view of the balance with static peel resistance, it is usually suitably, for instance, 45 or less (typically 40 or less).

The PSA sheet according to another preferable embodiment has a static peel resistance of 15 mm or less (more preferably 10 mm or less, yet more preferably 8 mm or less, e.g. 5 mm or less) when measured against a high impact polystyrene plate (HIPS plate) as the adherend by a method described later in the working examples. When measured against an acrylonitrile-butadiene-styrene copolymer resin plate (ABS plate) as the adherend, the static peel resistance is preferably 25 mm or less (more preferably 15 mm or less, yet more preferably 10 mm or less, e.g. 8 mm or less).

The PSA sheet disclosed herein preferably has a 180° peel strength of 12 N/20mm or greater (more preferably 14 N/20mm or greater, yet more preferably 15 N/20mm or greater) when measured by a method described later in the working examples.

The PSA sheet disclosed herein preferably does not fall off at a test temperature of 40 °C in a holding power test described later in the working examples, or more preferably does not fall off at a test temperature of 60 °C.

Although not particularly limited, because of the features combining high tack and good static peel resistance, the PSA sheet disclosed herein can be preferably used for joining components together or for labelling in OA equipment, home appliances, automobiles and various other products. For instance, it is preferable for purposes involving adhesion to a component made of a resin such as an acrylonitrile-butadiene-styrene copolymer (ABS), high impact polystyrene, polypropylene (HIPS), etc. When the PSA sheet is adhered to an adherend by hand, the significance of using the composition of the present invention can be particularly well exhibited. The adhering of the PSA sheet to the adherend may be an operation of attaching a component adhered on the first adhesive face of the double-faced PSA sheet to another component.

The matters disclosed by this description include the following:
(1) A PSA composition comprising a base polymer and a tackifier resin, wherein
   the base polymer is an acrylic polymer,
   the tackifier resin comprises a tackifier resin T_{L} having a softening point of lower than 105 °C and a tackifier resin T_{H} having a softening point of 105 °C or higher, but 170 °C or lower,
   the tackifier resin T_{L} comprises a rosin-based resin, and
   the tackifier resin T_{H} comprises a phenolic resin.
(2) The PSA composition according to (1) above, comprising the tackifier resin T_{L} and the tackifier resin T_{H} in a combined amount of 10 parts by weight or more, but 50 parts by weight or less relative to 100 parts by weight of the acrylic polymer.
(3) The PSA composition according to (1) or (2) above, wherein the tackifier resin T_{L} comprises, as the rosin-based resin, a rosin-based resin having a softening point of 60 °C or higher.
(4) The PSA composition according to any one of (1)-(3) above, wherein the tackifier resin T_{L} comprises, as the rosin-based resin, a hydrogenated rosin ester having a softening point of 60 °C or higher.
(5) The PSA composition according to any one of (1)-(4) above, wherein the tackifier resin T_{L} comprises, as the rosin-based resin, a non-hydrogenated rosin ester having a softening point of 60 °C or higher.
(6) The PSA composition according to any one of (1)-(5) above, wherein the tackifier resin T_{L} comprises, as the rosin-based resin, two different species of rosin-based resin having different softening points.
(7) The PSA composition according to any one of (1)-(6) above, wherein the tackifier resin T_{H} comprises, as the phenolic resin, at least one species selected from a group consisting of a terpene-phenol resin, a hydrogenated terpene-phenol resin, an alkylphenol resin and a rosin-phenol resin.
(8) The PSA composition according to any one of (1)-(7) above, wherein the tackifier resin T_{H} content is less than 10 parts by weight to 100 parts by weight of the acrylic polymer.
(9) A PSA sheet comprising a PSA layer formed from the PSA composition according to any one of (1)-(8) above.
(10) The PSA sheet according to (9) above, wherein the PSA layer is crosslinked by an isocyanate-based crosslinking agent.

Several worked examples relating to the present invention are described below, but the present invention is not intended to be limited to these examples. In the description below, "parts" and "%" are based on weight unless otherwise specified. The respective physical properties in the next description were measured or tested in the following ways.

### <Test Methods>

### [Ball Tack]

Based on JIS Z0237, each PSA sheet sample was measured for rolling ball tack (30° slope angle). The ball number of the largest ball held (stopped) was recorded as the ball tack.

### [180° Peel Strength]

From each double-faced PSA sheet, the release liner covering the first adhesive face was removed. The exposed first adhesive face was adhered to and backed with a 25 µm thick polyethylene terephthalate (PET) film. The backed PSA sheet was cut to a size of 20 mm width by 100 mm length to prepare a test piece. In an environment at 23 °C, 50 % RH, the release liner covering the second adhesive face of the test piece was removed. The test piece was pressure-bonded to a surface of a stainless steel plate (SUS plate) with a 2 kg roller moved back and forth once. In the same environment, the resultant was left standing for 30 minutes and, based on JIS Z0237, measured for 180° peel strength (N/20mm) at a tensile speed of 300 mm/min, using a tensile tester.

### [Static Peel Resistance Test]

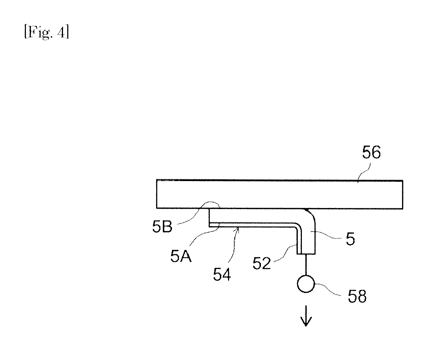

As shown in Fig. 4, the first adhesive face 5A of double-faced PSA sheet 5 was adhered to and backed with a 25 µm thick PET film 52. The backed PSA sheet 5 was cut to a size of 10 mm width by 100 mm length to prepare a test piece 54. In an environment at 23 °C, 50 % RH, the second adhesive face 5B of test piece 54 was pressure-bonded to a surface of adherend 56 with a 2 kg roller moved back and forth once. The resultant was left standing in the same environment for 24 hours. Subsequently, in the environment at 23 °C, 50 % RH, as shown in Fig. 4, adherend 56 was held horizontally so that the surface having test piece 54 faced downward. A load 58 was attached to one end of test piece 54 at a peel angle of 90° and the peeled distance after 24 hours was measured. The static peel resistance (peeled distance) was measured according to the procedures described above with respect to two kinds of adherend, namely a high impact polystyrene plate (HIPS plate, available from Nippon Testpanel Co. Ltd.) and an acrylonitrile-butadiene-styrene copolymer resin plate (ABS plate, available from Shin-Kobe Electric Machinery Co., Ltd.). The weight of load 58 was 30 g for the HIPS plate adherend and 50 g for the ABS plate adherend. The results are shown as "to-PSt" for the HIPS plate adherend and "to-ABS" for the ABS plate adherend in Tables 1 to 4. It is noted that the examples shown in Table 1 were not tested for static peel resistance to the ABS plate adherend.

### [Holding Power Test]

Each double-faced PSA sheet was cut to a 10 mm wide strip to prepare a test piece. The release liner covering the first adhesive face was removed and the exposed first adhesive face was adhered to and backed with a 10 µm thick PET film Subsequently, the release liner covering the second adhesive face of the test piece was removed. To a Bakelite plate as the adherend, one end of the test piece was adhered over a bonded surface area measuring 10 mm in width and 20 mm in length. The resultant was stored in an environment at a prescribed test temperature for 30 minutes. Subsequently, the Bakelite plate was suspended vertically in the environment at the test temperature and a 500 g load was applied to the free end of the test piece. After stored with the load applied thereto for one hour in the environment at the test temperature, the measurement sample was measured for distance (mm) from the originally adhered location. At three standard test temperatures of 40 °C, 60 °C and 80 °C, the holding power was assessed according to the procedures described above. When the measurement sample peeled and fell off the Bakelite plate within one hour after the load was applied, "Fell off" is shown in the test result field

### <Materials Used>

### [Tackifier Resins]

Rosin-based resin R1: rosin ester resin, softening point 100 °C (available from Sun Shine Forestry Chemicals Co., Ltd., trade name "GEDIR-100M")
Rosin-based resin R2: hydrogenated resin glycerin ester resin, softening point 80 °C (trade name "GEHR-80M" available from Sun Shine Forestry Chemicals Co., Ltd.)
Rosin-based resin R3: hydrogenated rosin methyl ester resin, liquid form (trade name "MHDR" available from Sun Shine Forestry Chemicals Co., Ltd.)
Phenolic resin P1: terpene-phenol resin, softening point 133 °C (trade name "SUMILITE RESIN PR-12603N" available from Sumitomo Bakelite Co., Ltd.)
Phenolic resin P2: rosin ester phenol resin, softening point 120 °C (trade name "KB120" available from Guangdong Komo Co., Ltd.)
Phenolic resin P3: rosin ester phenol resin, softening point 150 °C (trade name "KP150" available from Guangdong Komo Co., Ltd.)

### [Crosslinking Agents]

Isocyanate-based crosslinking agent: trade name "CORONATE L" (available from Nippon Polyurethane Industry Co., Ltd)
Epoxy-based crosslinking agent: trade name "TETRAD C" (available from Mitsubishi Gas Chemical Inc.)

### <Experiment 1>

### (Example C1)

To a reaction vessel equipped with a stirrer, thermometer, nitrogen gas inlet, reflux condenser and addition funnel, were placed 70 parts of n-butyl acrylate (BA), 30 parts of 2-ethylhexyl acrylate (2EHA), 3 parts of acrylic acid (AA) and 0.05 part of 4-hydroxybutyl acrylate (4HBA) as monomers, 0.08 part of 2,2'-azobisisobutylonitrile (AIBN) as a polymerization initiator and 150 parts of toluene as a polymerization solvent. Solution polymerization of the mixture was carried out at 65 °C for 8 hours to obtain a toluene solution of an acrylic polymer A. The Mw of the acrylic polymer A was 40 × 10⁴.

To 100 parts of the acrylic polymer in the toluene solution, as shown in Table 1, were added 30 parts of rosin-based resin R1 as a tackifier resin and 2.5 parts of the isocyanate-based crosslinking agent to prepare a PSA composition according to the present example.

### (Examples C2-C6)

The respective types and amounts of tackifier resins used to 100 parts of acrylic polymer A were as shown in Table 1. Otherwise, in the same manner as Example C1, PSA compositions according to Examples C2 to C6 were prepared.

### (Example E1)

In the present example, as shown in Table 2, to 100 parts of acrylic polymer, 25 parts of rosin-based resin R2 and 5 parts of phenolic resin P1 were used as the tackifier resin. As the crosslinking agent, were used 1.0 part of the isocyanate-based crosslinking agent and 0.01 part of the epoxy-based crosslinking agent. Otherwise, in the same manner as Example C1, a PSA composition according to Example E1 was prepared.

### (Examples E2-E3 and Examples C7-C9)

The respective types and amounts of tackifier resins used to 100 parts of acrylic polymer A and the types and amounts of crosslinking agents were as shown in Table 2. Otherwise, in the same manner as Example C1, PSA compositions according to Examples E2 to E3 and Examples C7 to C9 were prepared.

### [Fabrication and Evaluation of Double-Faced PSA Sheets]

Using the PSA composition according to each example, a double-faced PSA sheet having a PSA layer on each face of PET film (support substrate) was fabricated.

In particular, were obtained two sheets of release liner having a release surface treated with a release agent on one face. To each of the release faces of the two sheets of release liner, the PSA composition according to each example was applied and dried at 100 °C for two minutes to a final thickness of about 65 µm. A PSA layer was thus formed on each release face of the two sheets of release liner.

To the first and second faces of a 25 µm thick transparent PET film, were adhered (transfer method) the PSA layers formed on the two sheets of release liners, respectively. By this, was fabricated a double-faced PSA sheet having a PSA layer on each face of the PET film with a total thickness of 140 µm to 160 µm. The release liners were left on the PSA layers to protect the surfaces (adhesive faces) of the PSA layers.

The resulting double-faced PSA sheets were evaluated by the methods described above. The results are shown in Table 1 and Table 2. It is noted that "-" in the test result field indicates that it was not measured.

[Table 1]

**Table 1**

| Example | | | C1 | C2 | C3 | C4 | C5 | C6 |
|---|---|---|---|---|---|---|---|---|
| PSA Composition (parts by wt.) | Acrylic polymer | | 100 | 100 | 100 | 100 | 100 | 100 |
| | Rosin-based resin R1 (sp 100 °C) | | 30 | 35 | 40 | 45 | - | - |
| | Rosin-based resin R2 (sp 80 °C) | | - | - | - | - | 30 | 40 |
| | Isocyanate-based crosslinking agent | | 2.5 | 2.5 | 2.5 | 2.5 | 2.5 | 2.5 |
| Test results | Ball tack (JIS method) | | 28 | 26 | 26 | 23 | 30 | 26 |
| | 180° Peel strength (N/20mm) | to-SUS | 16.0 | 16.0 | 17.5 | 16.3 | 15.7 | 17.7 |
| | Static peel resistance (mm) | to-PSt | >50 | 37 | 29 | 28 | >50 | 18 |
| | Holding power (mm) | 40 ° C | 0.4 | 0.5 | 0.5 | 0.6 | 0.7 | 0.8 |
| | | 60 °C | 0.5 | 0.5 | 0.6 | 0.7 | 0.8 | 1.0 |
| | | 80 °C | 0.5 | 0.6 | 0.7 | 0.6 | 0.8 | 1.2 |

[Table 2]

**Table 2**

| Example | | | E1 | E2 | E3 | C7 | C8 | C9 |
|---|---|---|---|---|---|---|---|---|
| PSA Composition (parts by wt.) | Acrylic polymer | | 100 | 100 | 100 | 100 | 100 | 100 |
| | Rosin-based resin R1 (sp 100 °C) | | - | 20 | 20 | 30 | 20 | 30 |
| | Rosin-based resin R2 (sp 80 °C) | | 25 | 5 | 15 | 10 | 20 | - |
| | Rosin-based resin R3 (liquid form) | | - | - | - | - | - | 10 |
| | Phenolic resin P1 (sp 133 °C) | | 5 | 5 | 5 | - | - | - |
| | Isocyanate-based crosslinking agent | | 1 | 1 | 2.5 | 2.5 | 2.5 | 2 |
| | Epoxy-based crosslinking agent | | 0.01 | 0.01 | - | - | - | - |
| Test results | Ball tack (JIS method) | | 25 | 25 | 25 | 26 | 26 | 19 |
| | 180° Peel strength (N/20mm) | to-SUS | 16.3 | 18.9 | 17.7 | 18.6 | 17.7 | 14.5 |
| | Static peel resistance (mm) | to-PSt | 5 | 3 | 1 | 29 | 30 | >50 |
| | | to-ABS | 21 | 7 | 19 | 29 | 25 | >50 |
| | Holding power (mm) | 40 °C | 1.2 | 1.1 | 0.6 | 0.6 | 0.6 | 0.5 |
| | | 60 °C | 1.4 | 1.2 | 1.0 | 0.7 | 0.9 | 0.8 |
| | | 80 °C | - | - | 0.8 | 0.9 | 0.9 | 0.9 |

From Examples C1 to C4 and Examples C5 to C6 shown in Table 1, it is evident that ball tack and static peel resistance cannot be combined just by adjusting the amount of rosin-based resin R1 or R2 in a composition containing one of them alone as the tackifier resin.

On the other hand, as shown in Table 2, excellent ball tack and good static peel resistance were obtained at the same time with respect to Examples E1 to E3 comprising a rosin-based resin (T_{L}) having a softening point of lower than 105 °C and a tackifier resin (T_{H}) having a softening point of 105 °C or higher, but 170 °C or lower. Specifically, the ball tack was 25 or greater while the to-PSt static peel resistance was 15 mm or less and the to-ABS static peel resistance was 25 mm or less. In particular, with respect to Examples E2 and E3 using two species R1 and R2 as the rosin-based resin (T_{L}) having a softening point of lower than 105 °C, yet greater static peel resistance was exhibited when compared with Example E1.

On the contrary, Examples C7 to C9 lacked balance between ball tack and static peel resistance, with each example using just two species of rosin-based resin having a softening point of lower than 105 °C as the tackifier resin.

With respect to the holding power, none of the double-faced PSA sheets tested herein fell off at any of the test temperatures.

### <Experiment 2>

### (Examples E4-E6 and Examples C10-C11)

The respective types and amounts of tackifier resins used to 100 parts of acrylic polymer A and the types and amounts of crosslinking agents were as shown in Table 3. Otherwise, in the same manner as Example C1, PSA compositions according to Examples E4 to E6 and Examples C10 to C11 were prepared.

### (Examples E7-E13)

The respective types and amounts of tackifier resins used to 100 parts of acrylic polymer A and the types and amounts of crosslinking agents were as shown in Table 4. Otherwise, in the same manner as Example C1, PSA compositions according to Examples E7 to E13 were prepared.

### [Fabrication and Evaluation of Double-Faced PSA Sheets]

Using the PSA composition according to each example, a double-faced PSA sheet having a PSA layer on each face of a non-woven fabric substrate (support substrate) was fabricated.

In particular, as the release liner, were obtained two sheets of release liner having a release surface treated with a release agent on one face. To each of the release faces of the two sheets of release liner, the PSA composition according to each example was applied and dried at 100 °C for two minutes to a final thickness of about 65 µm to 70 µm. APSA layer was thus formed on each release face of the two sheets of release liner.

To the first and second faces of the non-woven fabric substrate, were adhered (transfer method) the PSA layers formed on the two sheets of release liners, respectively. As the non-woven fabric substrate, was used a PET-based non-woven fabric of 40 µm in thickness and 14 g/m² in grammage. A double-faced PSA sheet having a PSA layer on each face of the non-woven fabric substrate was thus fabricated, having a total thickness of 140 µm to 160 µm. The release liners were left on the PSA layers to protect the surfaces (adhesive faces) of the PSA layers.

The resulting double-faced PSA sheets were evaluated by the methods described above. The results are shown in Table 3 and Table 4. It is noted that "-" in the test result field indicates that it was not measured.

[Table 3]

**Table 3**

| Example | | | E4 | E5 | E6 | C10 | C11 |
|---|---|---|---|---|---|---|---|
| PSA Composition (parts by wt.) | Acrylic polymer | | 100 | 100 | 100 | 100 | 100 |
| | Rosin-based resin R1 (sp 100 °C) | | - | 20 | 20 | 35 | - |
| | Rosin-based resin R2 (sp 80 °C) | | 35 | 15 | 5 | - | 35 |
| | Phenolic resin P1 (sp 133 °C) | | 5 | 5 | 5 | - | - |
| | Isocyanate-based crosslinking agent | | 2.5 | 2.5 | 2.5 | 2.5 | 2.5 |
| Test results | Ball tack (JIS method) | | 30 | 30 | 30 | 30 | 30 |
| | 180° Peel strength (N/20mm) | to-SUS | 15.7 | 15.3 | 14.2 | 16.3 | 13.0 |
| | Static peel resistance (mm) | to-PSt | 9 | 7 | 14 | 27 | 19 |
| | | to-ABS | 7 | 4 | 16 | 22 | 17 |
| | Holding power (mm) | 40 °C | 1.0 | 0.7 | 0.5 | 0.8 | 0.7 |
| | | 60 °C | 1.4 | 1.1 | 0.7 | 1.1 | 1.0 |
| | | 80 °C | 1.8 | 1.1 | 0.6 | 1.1 | 1.1 |

[Table 4]

**Table 4**

| Example | | | E7 | E8 | E9 | E10 | E11 | E12 | E13 |
|---|---|---|---|---|---|---|---|---|---|
| PSA Composition (parts by wt.) | Acrylic polymer | | 100 | 100 | 100 | 100 | 100 | 100 | 100 |
| | Rosin-based resin R1 (sp 100 °C) | | - | - | 20 | 20 | 20 | 20 | 20 |
| | Rosin-based resin R2 (sp 80 °C) | | 25 | 25 | 5 | 5 | 5 | 5 | 15 |
| | Phenolic resin P1 (sp 133 °C) | | 5 | 5 | 5 | 5 | - | - | 5 |
| | Phenolic resin P2 (sp 120 °C) | | - | - | - | - | 5 | - | - |
| | Phenolic resin P3 (sp 150 °C) | | - | - | - | - | - | 5 | - |
| | Isocyanate-based crosslinking agent | | 1 | 1.5 | 1 | 1.5 | 1.5 | 1.5 | 1.5 |
| | Epoxy-based crosslinking agent | | 0.01 | 0.01 | 0.01 | 0.01 | 0.01 | 0.01 | 0.01 |
| Test results | Ball tack (JIS method) | | 30 | 30 | 30 | 30 | 32 | 30 | 32 |
| | 180° Peel strength (N/20mm) | to-SUS | 14.6 | 15.9 | 14.6 | 15.0 | 14.2 | 17.0 | 16.1 |
| | Static peel resistance (mm) | to-PSt | 3 | 2 | 3 | 4 | 3 | 3 | 1 |
| | | to-ABS | 7 | 6 | 7 | 7 | 4 | 6 | 2 |
| | Holding power (mm) | 40 °C | 1.8 | 1.7 | 2.1 | 1.0 | 1.1 | 1.1 | 1.0 |
| | | 60 °C | 2.6 | 2.0 | 2.6 | 1.1 | 1.4 | 1.5 | 1.3 |
| | | 80 °C | - | - | - | - | 1.6 | 1.7 | 1.3 |

As shown in Table 3 and Table 4, excellent tack and good static peel resistance were obtained at the same time with respect to Examples E4 to E13 comprising a rosin-based resin (T_{L}) having a softening point of lower than 105 °C and a tackifier resin (T_{H}) having a softening point of 105 °C or higher, but 170 °C or lower in combination. On the contrary, Examples C10 and C11 comprising a rosin-based resin R1 or R2 solely as the tackifier resin lacked balance between the tack and static peel resistance.

With respect to the holding power, none of the double-faced PSA sheets tested herein fell off at the test temperatures, either 40 °C or 60 °C. From the results of Examples E7 to E10, it can be found that by adjusting the amount of crosslinking agent used, the holding power can be further improved while maintaining high tack.

Although specific embodiments of the present invention have been described in detail above, these are merely for illustrations and do not limit the scope of claims. The art according to the claims includes various modifications and changes made to the specific embodiments illustrated above.

### [Reference Signs List]

1, 2, 3 PSA sheets
11 first PSA layer
11A first adhesive face
12 second PSA layer
12A second adhesive face
15 substrate (support substrate)
21, 22 release liners

## Claims

1. A pressure-sensitive adhesive composition comprising a base polymer and a tackifier resin, wherein
the base polymer is an acrylic polymer,
the tackifier resin comprises a tackifier resin T_{L} having a softening point of lower than 105 °C and a tackifier resin T_{H} having a softening point of 105 °C or higher, but 170 °C or lower,
the tackifier resin T_{L} comprises a rosin-based resin, and
the tackifier resin T_{H} comprises a phenolic resin.

2. The pressure-sensitive adhesive composition according to Claim 1, comprising the tackifier resin T_{L} and the tackifier resin T_{H} in a combined amount of 10 parts by weight or more, but 50 parts by weight or less to 100 parts by weight of the acrylic polymer.

3. The pressure-sensitive adhesive composition according to Claim 1 or 2, wherein the tackifier resin T_{L} comprises, as the rosin-based resin, a rosin-based resin having a softening point of 60 °C or higher.

4. The pressure-sensitive adhesive composition according to any one of Claims 1 to 3, wherein the tackifier resin T_{L} comprises, as the rosin-based resin, a hydrogenated rosin ester having a softening point of 60 °C or higher.

5. The pressure-sensitive adhesive composition according to any one of Claims 1 to 4, wherein the tackifier resin T_{L} comprises, as the rosin-based resin, a non-hydrogenated rosin ester having a softening point of 60 °C or higher.

6. The pressure-sensitive adhesive composition according to any one of Claims 1 to 5, wherein the tackifier resin T_{L} comprises, as the rosin-based resin, two species of rosin-based resin having different softening points.

7. The pressure-sensitive adhesive composition according to any one of Claims 1 to 6, wherein the tackifier resin T_{H} comprises, as the phenolic resin, at least one species selected from a group consisting of a terpene-phenol resin, a hydrogenated terpene-phenol resin, an alkylphenol resin and a rosin-phenol resin.

8. The pressure-sensitive adhesive composition according to any one of Claims 1 to 7, comprising the tackifier resin T_{H} in an amount of less than 10 parts by weight to 100 parts by weight of the acrylic polymer.

9. A pressure-sensitive adhesive sheet comprising a pressure-sensitive adhesive layer formed from the pressure-sensitive adhesive composition according to any one of Claims 1 to 8.

10. The pressure-sensitive adhesive sheet according to Claim 9, wherein the pressure-sensitive adhesive layer is crosslinked by an isocyanate-based crosslinking agent.
